# EUROPEAN PATENT APPLICATION

(11) **EP 3 754 920 A1**
(43) Date of publication of application: **23.12.2020**
(21) Application number: 20183348.0
(22) Date of filing: 24.05.2019
(51) Int. Cl.: H04L 12/861, H04L 29/08

(54) **COALESCING SMALL PAYLOADS**

(30) Priority: 29.06.2018 US 201816024623
(62) Divisional of application: 19176605.4
(71) Applicant: INTEL Corporation, Santa Clara, CA 95054 (US)
(72) Inventor: SERRES, Olivier Sylvain Gerard, Hudson, MA Massachusetts 01749 (US); KRISHNAN, Venkata S., Ashland, MA Massachusetts 01721 (US); LEUNG, Brian, Quincy, MA Massachusetts 02171 (US); MIAO, Chyi-Chang, Sharon, MA Massachusetts 02067 (US); STEWART, Lawrence Colm, Wayland, MA Massachusetts 01778 (US)
(74) Representative: 2SPL Patentanwälte PartG mbB

(57) **Abstract**

Particular embodiments described herein provide for an electronic device that can be configured to group two or more small packets that are to be communicated to a common destination, where the two or more packets are grouped together in a queue dedicated to temporarily store small packets that are to be communicated to the common destination, coalesce the small packets into a coalesced packet, where the coalesced packet is a network packet, and communicate the coalesced packet to the common destination. In an example, the size of a small packet is a packet that is smaller than the network packet. In another example, the size of a small packet is less than half the size of the network packet.

## Description

### TECHNICAL FIELD

This disclosure relates in general to the field of computing and/or networking, and more particularly, to the coalescing of small payloads.

### BACKGROUND

Emerging network trends in data centers and cloud systems place increasing performance demands on a system. The increasing demands can cause an increase of the use of resources in the system. The resources have a finite capability and each of the resources need to be managed.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a block diagram of a system to enable the coalescing of small payloads, in accordance with an embodiment of the present disclosure;
FIGURE 2A is a block diagram of a portion of a system to enable the coalescing of small payloads, in accordance with an embodiment of the present disclosure;
FIGURE 2B is a block diagram of a portion of a system to enable the coalescing of small payloads, in accordance with an embodiment of the present disclosure;
FIGURE 3A is a block diagram of a portion of a system to enable the coalescing of small payloads, in accordance with an embodiment of the present disclosure;
FIGURE 3B is a block diagram of a portion of a system to enable the coalescing of small payloads, in accordance with an embodiment of the present disclosure;
FIGURE 4 is a block diagram of a portion of a system to enable the coalescing of small payloads, in accordance with an embodiment of the present disclosure;
FIGURES 5A-5D are a block diagram of a portion of a system to enable the coalescing of small payloads, in accordance with an embodiment of the present disclosure;
FIGURES 6A is a block diagram illustrating example details of a packet to enable the coalescing of small payloads, in accordance with an embodiment of the present disclosure;
FIGURES 6B is a block diagram illustrating example details of a packet to enable the coalescing of small payloads, in accordance with an embodiment of the present disclosure;
FIGURE 7 is a flowchart illustrating potential operations that may be associated with the system in accordance with an embodiment; and
FIGURE 8 is a flowchart illustrating potential operations that may be associated with the system in accordance with an embodiment.

The FIGURES of the drawings are not necessarily drawn to scale, as their dimensions can be varied considerably without departing from the scope of the present disclosure.

### DETAILED DESCRIPTION

### EXAMPLE EMBODIMENTS

The following detailed description sets forth examples of apparatuses, methods, and systems relating to a system for enabling, the coalescing of small payloads in accordance with an embodiment of the present disclosure. Features such as structure(s), function(s), and/or characteristic(s), for example, are described with reference to one embodiment as a matter of convenience; various embodiments may be implemented with any suitable one or more of the described features.

In the following description, various aspects of the illustrative implementations will be described using terms commonly employed by those skilled in the art to convey the substance of their work to others skilled in the art. However, it will be apparent to those skilled in the art that the embodiments disclosed herein may be practiced with only some of the described aspects. For purposes of explanation, specific numbers, materials, and configurations are set forth in order to provide a thorough understanding of the illustrative implementations. However, it will be apparent to one skilled in the art that the embodiments disclosed herein may be practiced without the specific details. In other instances, well-known features are omitted or simplified in order not to obscure the illustrative implementations.

In the following detailed description, reference is made to the accompanying drawings that form a part hereof wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense. For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C).

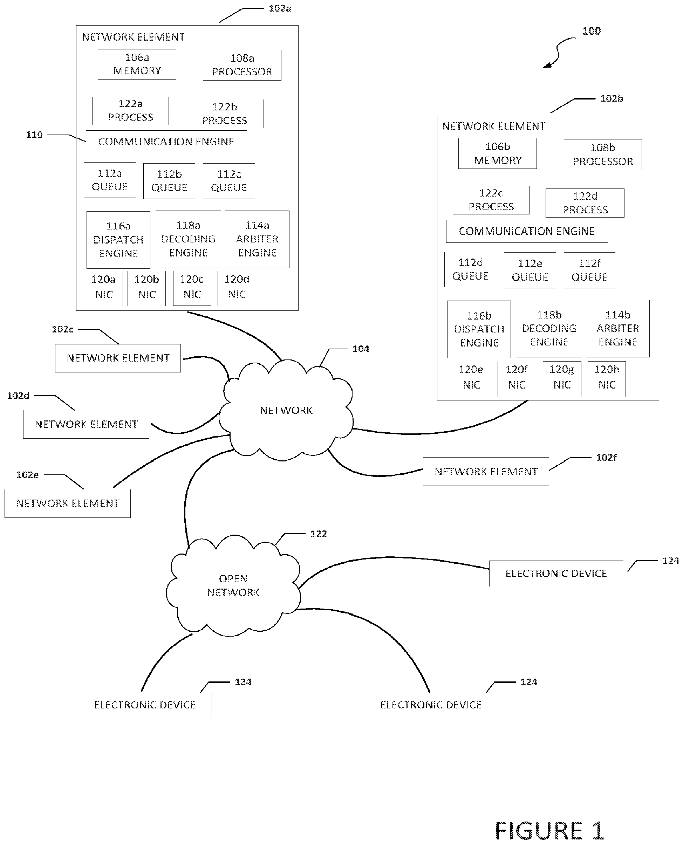

FIGURE 1 is a simplified block diagram of an electronic device configured to enable the coalescing of small payloads, in accordance with an embodiment of the present disclosure. In an example, a system 100 can include one or more network elements 102a-102f. Each network element 102a-102f can be in communication with each other using network 104. In an example, network elements 102a-102f and network 104 are part of a data center. Network 104 can be in communication with open network 122 (e.g., the Internet). Open network 122 can be in communication with electronic devices 124. Electronic devices 124 may be user equipment, cloud services, or some other type of electronic device that is in communication with network 104 through open network 122.

Each of network elements 102a-102f can include memory, a processor, a plurality of queues, an arbiter engine, a dispatch engine, a decoding engine, a plurality of NICs, and one or more processes. For example, network element 102a can include memory 106a, a processor 108a, a plurality of queues 112a-112c, an arbiter engine 114a, a dispatch engine 116a, a decoding engine 118a, a plurality of NICs 120a-120d, and one or more processes 122a and 122b. Network element 102b can include memory 106b, a processor 108b, a plurality of queues 112d-112f, an arbiter engine 114b, a dispatch engine 116b, a decoding engine 118b, a plurality of NICs 120e-120h, and one or more processes 122c and 122d. Each process 122a-122d may be a process, application, function, virtual network function (VNF), etc. Each of queues 112a-112f can be a dedicated queue to temporarily store small packets that are to be coalesced and communicated to a common destination and each queue can be associated with a unique destination.

NICs 120a-120d, (also known as a network interface card, network adapter, LAN adapter or physical network interface, and other similar terms) can be a computer hardware component that connects a network element (e.g., network element 102a) to a network (e.g., network 104). Early network interface controllers were commonly implemented on expansion cards that plugged into a computer bus. The low cost and ubiquity of the Ethernet standard means that most newer computers have a network interface built into the motherboard. Modern network interface controllers offer advanced features such as interrupt and DMA interfaces to the host processors, support for multiple receive and transmit queues, partitioning into multiple logical interfaces, and on-controller network traffic processing such as the TCP offload engine.

System 100 can be configured to coalesce or aggregate different small packets destined to the same destination or target, or different small packets that are sharing part of a path to the same destination or target. Once coalesced, the small packets can be communicated to the destination in a single packet rather than as individual packets. When received by the destination, the single packet is disaggregated into the different small packets. The term "small packet(s)" includes packet(s) that are smaller than a network packet. In some example, the small packet(s) are at least smaller than half the size of a network packet or packets that are small enough such that at least two of the packets can fit inside a network packet. The term "network packet" includes a packet that is communicated on a network and is a formatted unit of data carried by a packet switched network. In an example, the network packet is a high-performance computing fabric network packet. The terms "destination" and "target" include a network element that is the destination or target of a packet and the terms can be used interchangeably.

In an example, dispatch engine 116 can be configured to distribute small random packets, that are destined to the same destination, to a queue that has been designated or associated with the destination. In some implementations, the queue is part of a finite set of queues where each queue in the finite set of queues is associated with a specific unique destination. In other implementations, two or more queues in the finite set of queues are associated with the same destination (e.g., if a particular destination receives a very large number of small packets compared to other destinations). A queue is not necessarily needed for each destination for all the endpoints of a system if the aggregation is done at the edge or for all the local destinations if the packets are disaggregated and re-aggregated at each routing point (e.g. when crossing a switch). Also, each queue does not need to be very deep and could be as small as two small packets. For example, a sixteen (16), thirty-two (32), sixty-four (64), one hundred and twenty-eight (128) bytes deep queue could provide relatively good performance without dramatically increasing the required memory buffer. Note that the queue depth could be larger and the size of the queue at least partially depends on the size of the small packets, the size of the network packet, how quickly the queue will reach capacity, and/or other factors (e.g., memory capacity of the system, etc.). Arbiter engine 114 can be configured to select when the contents of a queue need to be coalesced and communicated to the destination. In an example, arbiter engine 114 can be configured to generate the coalesced packet for communication on the network to the destination. The term "coalesced packet" is a network packet that includes one or more small packets. In another example, a send queue or some other element can be configured to generate the coalesced packet for communication on the network to the destination. For fully random access, arbiter engine 114 can choose the queue with the maximum occupancy and send the coalesced packet as soon as a link becomes idle and/or an aggregation threshold is reached. If the small packets are not fully random, all the queues need to be processed periodically to ensure that a queue with low occupancy does not face starvation.

At the destination, the packet is disaggregated by a decoding engine (e.g., decoding engine 118b if network element 102b was the destination) and the packets or data in the packets are dispatched to the proper destination (e.g., memory inside the destination, some other destination that is not the same destination as the other packets in the coalesced packet, etc.). To help ensure that the data can reach the correct destination, the decoding engine can be configured to determine what network element is the destination or target or the next destination or target. This can be done by inspecting part of the payload of the packet such as an address to determine the correct network element. If no address is available or if multiple routing decisions need to be done across the system, the dispatch engine can add such an address as part of the payload of the packet to help ensure the packet reaches the destination or target.

It is to be understood that other embodiments may be utilized and structural changes may be made without departing from the scope of the present disclosure. Substantial flexibility is provided by system 100 in that any suitable arrangements and configuration may be provided without departing from the teachings of the present disclosure. Elements of FIGURE 1 may be coupled to one another through one or more interfaces employing any suitable connections (wired or wireless), which provide viable pathways for network (e.g., network 104, etc.) communications. Additionally, any one or more of these elements of FIGURE 1 may be combined or removed from the architecture based on particular configuration needs. System 100 may include a configuration capable of transmission control protocol/Internet protocol (TCP/IP) communications for the transmission or reception of packets in a network. System 100 may also operate in conjunction with a user datagram protocol/IP (UDP/IP) or any other suitable protocol where appropriate and based on particular needs.

As used herein, the term "when" and "caused" may be used to indicate the temporal nature of an event. For example, the phrase "event 'A' occurs when event 'B' occurs" is to be interpreted to mean that event A may occur before, during, or after the occurrence of event B, but is nonetheless associated with the occurrence of event B. For example, event A occurs when event B occurs if event A occurs in response to the occurrence of event B or in response to a signal indicating that event B has occurred, is occurring, or will occur. In addition, the phrase "event 'A' caused event 'B" to occur" is to be interpreted to mean that event B is associated with the occurrence of event A. For example, event B occurs when event A occurs if event B occurs in response to the occurrence of event A or in response to a signal indicating that event A has occurred, is occurring, or will occur. Reference to "one embodiment" or "an embodiment" in the present disclosure means that a particular feature, structure, or characteristic described in connection with the embodiment is included in at least one embodiment. The appearances of the phrase "in one embodiment" or "in an embodiment" are not necessarily all referring to the same embodiment.

For purposes of illustrating certain example techniques of system 100, the following foundational information may be viewed as a basis from which the present disclosure may be properly explained. End users have more media and communications choices than ever before. A number of prominent technological trends are currently afoot (e.g., more computing devices, more online video services, more Internet traffic), and these trends are changing the media delivery landscape. Data centers serve a large fraction of the Internet content today, including web objects (text, graphics, Uniform Resource Locators (URLs) and scripts), downloadable objects (media files, software, documents), applications (e-commerce, portals), live streaming media, on demand streaming media, and social networks. In addition, devices and systems, such as data centers, are expected to increase performance and function. However, the increase in performance and/or function can cause bottlenecks within the resources of the system and electronic devices in the system. One of the elements that can cause bottlenecks is small packets or network packets that include a small payload with extra space available or a large overhead.

Further, high-performance computing (HPC) systems capable of handling random accesses or packets of small payloads across a network are becoming more and more important due to big data analytics and HPC workloads with fine grain accesses. Big data analytics is the process of examining large and varied data sets (i.e., big data) to uncover hidden patterns, unknown correlations, market trends, customer preferences and other useful information for research purposes and to help organizations make informed business decisions. The workloads of big data analytics are often represented as very large graphs and when processed, present a random and fine grain access pattern while going through the graph. Biology research, social network analysis and computer security are a few examples of domains that highly benefit from an efficient processing of those random-access patterns across large graphs. For HPC, modern productive programming languages and runtime environments that rely on a distributed shared memory view of the system such as the Partitioned Global Address Space (PGAS) model also generate large numbers of small network messages. Having efficient small messages also allows for finer grain parallelization and thus, improves the scalability of the system.

However, these small packets can impact the resources of a network. For example, in contrast to the relatively small payload sizes, the packet header and trailer can add significant overhead. In an Infiniband fabric, the header overhead (LRH+BTH+CRC) is, in the very best case, twenty-six (26) bytes. For an Omnipath fabric the header will usually have thirty-two (32) bytes and for an Ethernet packet (following the IEEE 802.3 format), the header overhead is forty (40) bytes. For a payload of eight (8) bytes, the overall bandwidth utilization will be less than twenty five percent (< 25%). What is needed is a system and method to enable the coalescing of small payloads before the small payloads are communicated to a common destination.

A device to help with the coalescing of small payloads, as outlined in FIGURE 1, can resolve these issues (and others). System 100 can be configured to coalesces packets on the transmit side, coalesce packets from different endpoints but destined for the same destination, target, or group of targets, and use multi-stage aggregation, where messages may be reaggregated in switches at various points across the network. Some current systems may fragment packets before transmitting them or coalesce the packets on the receive side, unlike system 100 which coalesces the packets on the transmit side, transmits the coalesced packet, and fragments the coalesced packet at the receive side. The goal of most of the current systems is for optimal utilization of the host-NIC interface and also to reduce the burden on the CPU core. Unlike system 100, current systems do not help to improve the network link bandwidth utilization, especially for small packets that incur a large packet overhead.

System 100 can be configured to perform the opposite of current systems in that system 100 can be configured to aggregate small packets into a coalesced packet and send (transmit) the coalesced packet to a targeted destination. At the targeted destination the coalesced packet can be disaggregate into the small packets. Also, another major difference between system 100 and the current systems is that the aggregation can be performed across cores or even nodes. This expands the scope of how aggregation is done and is particularly important for random access applications running on a large system.

In some examples, system 100 can be configured for one or multiple network elements (e.g., network elements 102a-102f) to coalesce fine grain accesses or packets having a common destination or that are being communicated to a common destination, into a single large packet before sending the single large packet to the common destination (e.g., network element, network interface, switch port, etc.). This can help to improve performance and efficiency of random packets, where the random packets will share a single header. Coalescing small packets can help to reduce overhead by avoiding duplication of protocol version, source, and destination local identifier (LID), partition key (PKey), cyclic redundancy check (CRC), etc. The system can be implemented for small systems at a network interface or for large systems in the network switches. In some examples, hardware specific aggregation allows for fine grain aggregation, and the aggregation can be efficiently performed across threads, cores, nodes or even at the switch level. This cannot efficiently and practically be done in software. Additionally, reducing the number of packets on the network helps to alleviate fabric congestion and improve overall system performance.

In some examples, as the aggregation is done in hardware across a great number of cores and many small messages can be aggregated more quickly, improving the overall performance (better aggregation and thus, better use of bandwidth and reduced congestion) and reducing the aggregation latency for small messages (as the packet size will quickly reach a sufficient size and be sent). For example, in a twenty-eight (28) core node, the chances of encountering two small packets destined for the same remote destination is twenty-eight (28) times larger than if coalescing were restricted to the packet stream from a single core. In addition, the hardware can have visibility to the entire packet flow from all the cores in the node, while software running on a single core does not have the necessary visibility. Additionally, system 100 can be opportunistic in that small packets are not held or kept from being communicated for an extended period of time. System 100 can use a relatively small-time window to aggregate another packet (or packets) heading on the same route. The hardware can also easily implement very short timers to wait for further messages but still force transmission to keep messages timely. Note that software cannot easily implement timers to communicate a packet if more data does not arrive in some small interval.

In some examples, there may be a small bandwidth/latency trade-off, as the packets will encounter a slight increase in latency when the network load is low but given the major improvement in fabric bandwidth utilization, this is a small tradeoff that can be acceptable. Indeed, aggregating small packets at ingress can help to alleviate congestion and hence there would be an overall latency benefit across all packets. When the network load is low, the latency impact is based on the additional time a NIC has to wait before transmitting the packet. The time to wait before transmitting a packet can be a predetermined amount of time and based on a timer. The timer can be configurable and the predetermined amount of time could be in tens of nanoseconds and, in some implementations, even this small latency impact can be eliminated completely. Whether or not aggregation in hardware needs to be performed could be done by monitoring the level of congestion happening downstream. For example, a NIC could use the link flow credits available and if there is downstream congestion, the link would be low in flow credits. Additionally, the NIC could monitor the end-to-end latency and/or the local link utilization to determine whether or not to turn on the aggregation scheme.

In a specific example, a dispatcher (e.g., dispatch engine 116a) can be configured to distribute the small random packets to the correct queue (e.g., queue 112a) from a set of queues (e.g., queues 112a-112c). Each queue can be configured to temporarily store, hold, aggregate, etc. the small packets while they wait to be communicated in a single packet rather than in individual packets. Each queue does not need to be very deep. For example, a sixteen (16), thirty-two (32), sixty-four (64), one hundred and twenty-four (124) bytes deep queue could provide relatively good performance without dramatically increasing the required memory buffer. An arbiter (e.g., arbiter engine 114a) can be configured to select when the contents of a queue are ready to be sent. For example, the contents of a queue may be sent after a predetermined threshold level is reached in the queue (e.g., the queue is full or the queue could not hold another small packet) or after a predetermined amount of time. For fully random access, the arbiter can choose the queue with the maximum occupancy and send the aggregated packet as soon as a link becomes idle and/or the threshold is reached. If the packets are not fully random, all the queues need to be processed periodically to ensure that a queue with low occupancy does not face starvation. In an example, a specifically designated send queue can collect the small packets to be coalesced and be configured to generate the coalesced packet.

At the destination, the coalesced packet is disaggregated and dispatched. To ensure that the data from each small packet can reach the correct destination, a decoder (e.g., decoding engine 118a) needs to be able to determine what network element is targeted as the destination for each small packet. This can be done by inspecting part of the payload such as an address to determine the correct network element. If no address is available or if multiple routing decision need to be done across the system, the packet dispatch will need to add such an address as part of the payload of the coalesced packet.

With aggregation, the opportunity exists to simplify and speed up the software interface to the network. Software could write directly to an aggregation queue with the minimum information needed for the operation. For example, a short remote PUT command could consist of only an address and data. By using write combining space, this could realize a four-times speedup in software access to the network because a sixty-four (64) byte packet individual packet could be replaced by sixteen (16) bytes of data. Similarly, at the destination, when the packet is disaggregated, the NIC can perform a lower number of writes to the host memory as the operation aggregated in the packet may target contiguous or near-by addresses. Further, the same opportunity can exist for small messages destined for applications at a destination. For example, the destination could accept aggregated messages rather than unpacked ones, leading to greater efficiency at the receiver.

Before a job starts, specific connections need to be established between the aggregators and dis-aggregators. The connection process will be similar to any reliable connection establishment in a fabric network with the addition of setting up the small packet size and the addressing scheme to be used (e.g., which bits to use in the small packet to perform the routing at each aggregation disaggregation step). For large scale systems, with tens of thousands of nodes, end-to-end aggregation may not be sufficient (depending on the application). Additional dis-aggregation and re-aggregation at routing points may be required. In addition, between the end-points or the routing points of a large system, reliability may need to be maintained in order for the aggregated packets to be reliably delivered. This can be done using different methods such as establishing connections between the end-points which can be performed at setup or automatically by system 100.

In an illustrative example, consider an eight (8) byte payload (including the addressing), a fat tree supporting the full bisection bandwidth of the system, and that the network fabric interface supports a raw bandwidth of twenty-five (25) gigabytes per second (GB/s). Without aggregation, for eight (8) bytes of data, assuming thirty-two (32) bytes for packet overhead, the fabric port efficiency is only twenty percent (20%) or five (5) GB/s per node. To connect the system with a full-bisection bandwidth, twelve (12) switches are required.

By using system 100 and having four (4) nodes sharing a network interface, with a queue of sixteen (16) small packets deep (one hundred and twenty-eight (128) bytes), the network efficiency per network port is brought up to eighty percent (80%) (16x8=128B of payload) which is twenty (20) GB/s per network port or five (5) GB/s per node. As a result, a single switch (instead of twelve (12)) is able to support an equivalent system without any bandwidth degradation for the small packets. By using the aggregation, without node sharing (i.e. by keeping the switch structure intact), system 100 can improve the bandwidth per node. By using a queue depth of thirty-two (32) bytes, in an illustrative example, system 100 can obtain a bandwidth of twenty-two (22) GB/s, a more than four times (4x) improvement. The buffer memory for such queues on a two hundred and fifty-six (256) node cluster would be only two (2) MB.

From a purely hardware perspective, when a network is idle, aggregation will increase latency, because the first message in an aggregate packet is forced to wait for dispatch. When the network is idle, there is no bandwidth pressure and aggregation can be disabled. When the network is fifty percent (50%) loaded, a packet in a queue will have to wait for the arrival of a packet from approximately half the input ports with the same destination. Typical utilization curves for queuing systems obey Little's law and the expected service time rises steeply as the network utilization reaches capacity. Little's law states that the long-term average number ("L") of customers (i.e., small packets) in a stationary system (i.e., queue) is equal to the long-term average effective arrival rate ("*λ*") multiplied by the average time ("*W*") that a customer spends in the system. With aggregation, due to the elimination of headers, the network utilization is reduced about eighty percent (80%), which leads to super-linear reductions in network latency.

When software effects are taken into account, latency can be reduced further. In some current systems, hardware end to end latency is around 0.75 microseconds and software latency is about 1.3 microseconds on an unloaded network. The above back-of-the envelope congestion calculation suggests that the hardware delay could reach six (6) microseconds at fifty percent (50%) utilization, but would remain unchanged with aggregation

Turning to the infrastructure of FIGURE 1, system 100 in accordance with an example embodiment is shown. Generally, system 100 may be implemented in any type or topology of networks. Network 104 represents a series of points or nodes of interconnected communication paths for receiving and transmitting packets of information that propagate through system 100. Network 104 offers a communicative interface between nodes, and may be configured as any local area network (LAN), virtual local area network (VLAN), wide area network (WAN), wireless local area network (WLAN), metropolitan area network (MAN), Intranet, Extranet, virtual private network (VPN), and any other appropriate architecture or system that facilitates communications in a network environment, or any suitable combination thereof, including wired and/or wireless communication.

In system 100, network traffic, which is inclusive of packets, frames, signals, data, etc., can be sent and received according to any suitable communication messaging protocols. Suitable communication messaging protocols can include a multi-layered scheme such as Open Systems Interconnection (OSI) model, or any derivations or variants thereof (e.g., Transmission Control Protocol/Internet Protocol (TCP/IP), user datagram protocol/IP (UDP/IP)). Messages through the network could be made in accordance with various network protocols, (e.g., Ethernet, Infiniband, OmniPath, etc.). Additionally, radio signal communications over a cellular network may also be provided in system 100. Suitable interfaces and infrastructure may be provided to enable communication with the cellular network.

The term "packet" as used herein, refers to a unit of data that can be routed between a source node (e.g., network element, etc.) and a destination node (e.g., network element, target, etc.) on a packet switched network. A packet includes a source network address and a destination network address. These network addresses can be media access control (MAC) addresses or Internet Protocol (IP) addresses such as in in a TCP/IP messaging protocol, etc. The term "data" as used herein, refers to any type of binary, numeric, voice, video, textual, or script data, or any type of source or object code, or any other suitable information in any appropriate format that may be communicated from one point to another in electronic devices and/or networks. Additionally, messages, requests, responses, and queries are forms of network traffic, and therefore, may comprise packets, frames, signals, data, etc.

In an example implementation, network elements 102a-102f, are meant to encompass network elements, network appliances, servers, routers, switches, gateways, bridges, load balancers, processors, modules, or any other suitable device, component, element, or object operable to exchange information in a network environment. Network elements 102a-102f may include any suitable hardware, software, components, modules, or objects that facilitate the operations thereof, as well as suitable interfaces for receiving, transmitting, and/or otherwise communicating data or information in a network environment. This may be inclusive of appropriate algorithms and communication protocols that allow for the effective exchange of data or information. Each of network elements 102a-102f may be virtual or include virtual elements.

In regard to the internal structure associated with system 100, each of network elements 102a-102f can include memory elements for storing information to be used in the operations outlined herein. Each of network elements 102a-102f may keep information in any suitable memory element (e.g., random access memory (RAM), read-only memory (ROM), erasable programmable ROM (EPROM), electrically erasable programmable ROM (EEPROM), application specific integrated circuit (ASIC), etc.), software, hardware, firmware, or in any other suitable component, device, element, or object where appropriate and based on particular needs. Any of the memory items discussed herein should be construed as being encompassed within the broad term 'memory element.' Moreover, the information being used, tracked, sent, or received in system 100 could be provided in any database, register, queue, table, cache, control list, or other storage structure, all of which can be referenced at any suitable timeframe. Any such storage options may also be included within the broad term 'memory element' as used herein.

In certain example implementations, the functions outlined herein may be implemented by logic encoded in one or more tangible media (e.g., embedded logic provided in an ASIC, digital signal processor (DSP) instructions, software (potentially inclusive of object code and source code) to be executed by a processor, or other similar machine, etc.), which may be inclusive of non-transitory computer-readable media and machine-readable media. In some of these instances, memory elements can store data used for the operations described herein. This includes the memory elements being able to store software, logic, code, or processor instructions that are executed to carry out the activities described herein.

In an example implementation, elements of system 100, such as network elements 102a-102f may include software modules (e.g., arbiter engine 114, dispatch engine 116, decoding engine 118, etc.) to achieve, or to foster, operations as outlined herein. These modules may be suitably combined in any appropriate manner, which may be based on particular configuration and/or provisioning needs. In example embodiments, such operations may be carried out by hardware, implemented externally to these elements, or included in some other network device to achieve the intended functionality. Furthermore, the modules can be implemented as software, hardware, firmware, or any suitable combination thereof. These elements may also include software (or reciprocating software) that can coordinate with other network elements in order to achieve the operations, as outlined herein.

Additionally, each of network elements 102a-102f may include a processor that can execute software or an algorithm to perform activities as discussed herein. A processor can execute any type of instructions associated with the data to achieve the operations detailed herein. In one example, the processors could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an erasable programmable read-only memory (EPROM), an electrically erasable programmable read-only memory (EEPROM)) or an ASIC that includes digital logic, software, code, electronic instructions, or any suitable combination thereof. Any of the potential processing elements, modules, and machines described herein should be construed as being encompassed within the broad term 'processor.'

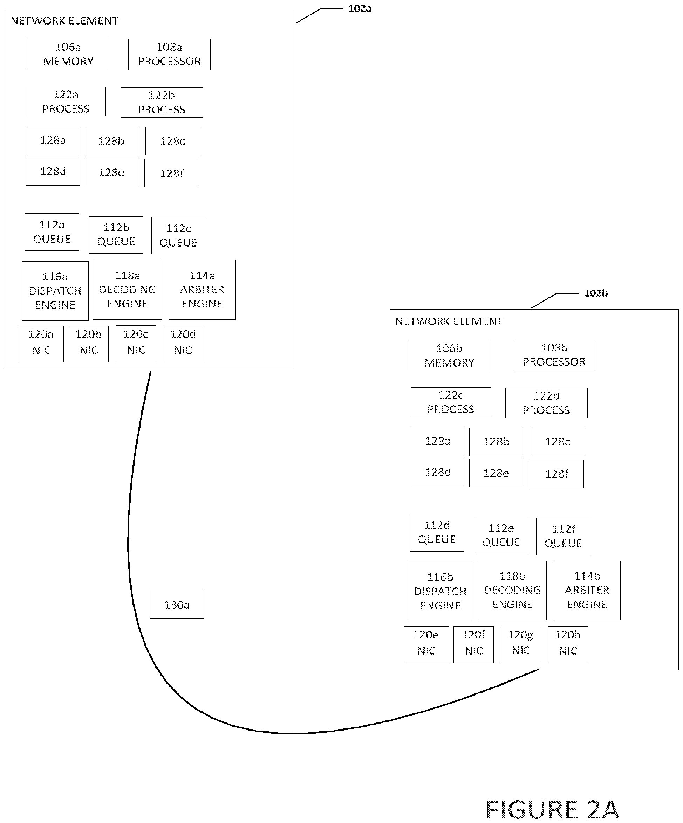

Turning to FIGURE 2A, FIGURE 2A is a simplified block diagram of network element 102a communicating a coalesced packet 130a to network element 102b. Packets 128a-128f are small packets that if sent individually, would be packets with a large packet overhead and could cause relatively inefficient use of the network. Arbiter engine 114a can group the packets together into one coalesced packet 130a and communicate coalesced packet 130a to network element 102b. Because packets 128a-128f are communicated in coalesced packet 130a rather than individually in six separate packets, bandwidth and network resources can be saved. When network element 102b receives coalesced packet 130a, decoding engine 118b can extract packets 128a-128f from coalesced packet 130a.

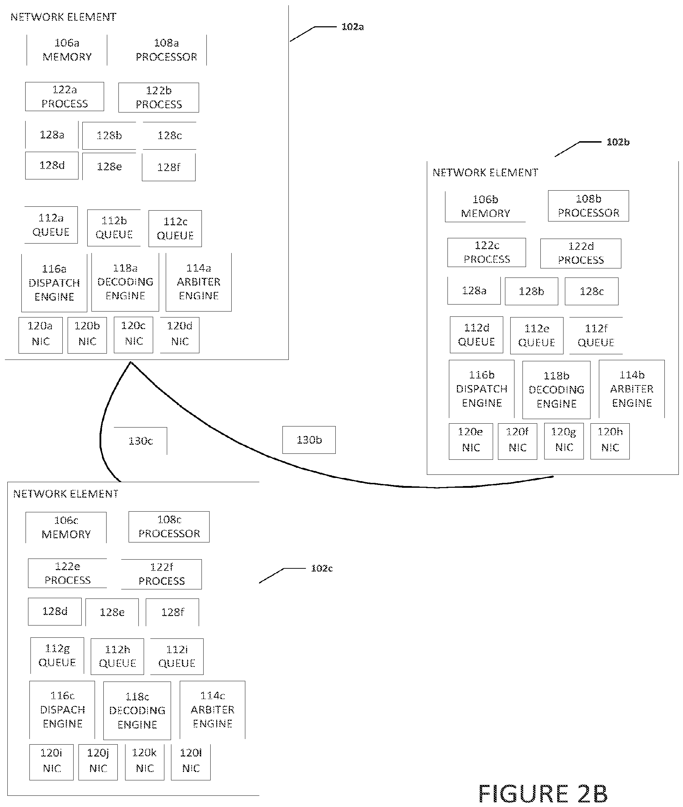

Turning to FIGURE 2B, FIGURE 2B is a simplified block diagram of network element 102a communicating a coalesced packet 130b to network element 102b and a coalesced packet 130c to network element 102c. Network element 102c can include memory 106c, a processor 108c, a plurality of queues 112g-112i, an arbiter engine 114c, a dispatch engine 116c, a decoding engine 118c, a plurality of NICs 120i-120l, and one or more processes 122e and 122f. Each process 122e and 122f may be a process, application, function, virtual network function (VNF), etc. and may generate one or more of packets 128a-128c

As illustrated in FIGURE 2B, the destination of packets 128a-128c is network element 102b and the destination of packets 128d-128f is network element 102c. Dispatch engine 116a can be configured to determine the destination of each of packets 128a-128c and assign each of packets 128a-128c to the queue that is associated with the common destination of packets 128a-128c. For example, because packets 128a-128c have the same destination (e.g., network element 102b), dispatch engine 116a may assign packets 128a-128c to queue 112a. Also, because packets 128d-128f have the same destination (e.g., network element 102c), dispatch engine 116a may assign packets 128d-128f to queue 112b.

Arbiter engine 114a can be configured to select which packets in a queue need to be sent next and group the packets together into one coalesced packet and communicate the coalesced packet to the proper destination. For example, arbiter engine 114a can determine that the packets in queue 112a need to be sent because either queue 112a is full, has satisfied a threshold, a predetermined amount of time has passed, etc. and arbiter engine 114a can coalesce packets 128a-128c into coalesced packet 130b and communicate coalesced packet 130b to network element 102b. Because packets 128a-128c are communicated in coalesced packet 130b rather than individually in three separate packets, bandwidth and network resources can be saved. When network element 102b receives coalesced packet 130b, decoding engine 118b can extract packets 128a-128c from coalesced packet 130b.

In addition, arbiter engine 114a can determine that the packets in queue 112b need to be sent because either queue 112b is full, has satisfied a threshold, a predetermined amount of time has passed, etc. and arbiter engine 114a can coalesce packets 128d-128f into coalesced packet 130c and communicate coalesced packet 130c to network element 102c. Because packets 128d-128f are communicated in coalesced packet 130c rather than individually in three separate packets, bandwidth and network resources can be saved. When network element 102c receives coalesced packet 130c, decoding engine 118c can extract packets 128d-128f from coalesced packet 130c.

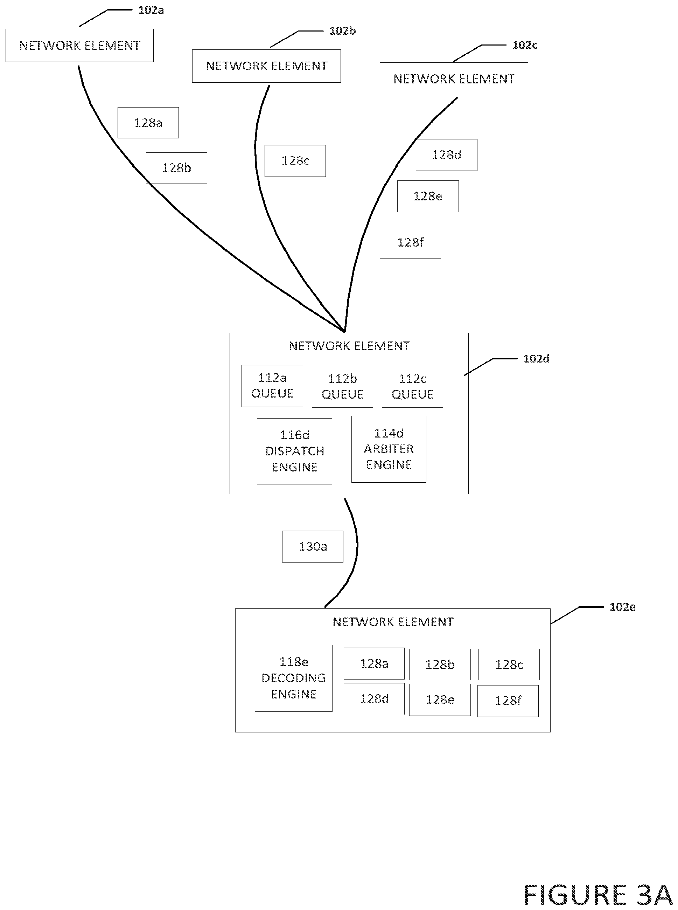

Turning to FIGURE 3A, FIGURE 3A is a simplified block diagram of example details of system 100. As illustrated in FIGURE 3A, network element 102d receives small packets from one or more of network elements 102a-102c. In an example, network element 102d is a switch. Packets 128a-128f are small packets. Arbiter engine 114d can group the packets together into one coalesced packet 130a and communicate coalesced packet 130a to network element 102b. Because packets 128a-128f are communicated in coalesced packet 130a rather than individually in six separate packets, bandwidth and network resources can be saved. When network element 102e receives coalesced packet 130a, decoding engine 118e can extract packets 128a-128f from coalesced packet 130a.

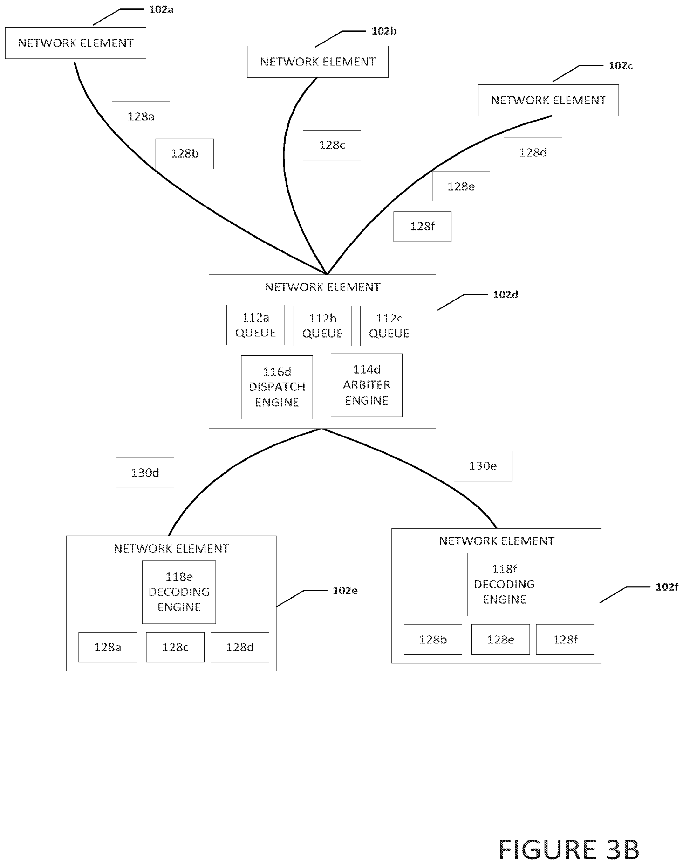

Turning to FIGURE 3B, FIGURE 3B is a simplified block diagram of example details of system 100. As illustrated in FIGURE 3B, network element 102d receives small packets from one or more of network elements 102a-102c. Packets 128a-128f are small packets that may have different final destinations but may have a common destination along the network path to the different final destinations. For example, as illustrated in FIGURE 3B, the final destination of packets 128a and 128b are different network elements but the packets do have the same destination along the path to the different network elements. More specifically, regarding packets 128a and 128b from network element 102a, the final destination of packet 128a is network element 102e and the final destination of packet 128b is network element 102f. However, both packet 128a and packet 128b have a common destination of network element 102d (e.g., a switch along the network path to network elements 102e and 102f). Further, regarding packets 128d-128f from network element 102c, the final destination of packet 128d is network element 102e and the final destination of packets 128e and 128f is network element 102f. However, packets 128d-128f have a common destination of network element 102d.

Because packets 128a and 128b have a common destination (network element 102d) along the network path to the different final destinations, network element 102a can coalesce packets 128a and 128b and communicate them to the common destination of network element 102d. Also, because packets 128d-128e have a common destination (network element 102d) along the network path to the different final destinations, network element 102c can coalesce the packets and communicate them to the common destination of network element 102d. After packets 128a, 128b, and 128d-128f arrive at network element 102d, dispatch engine 116d can be configured to determine the destination of each of the packets, along with other received packets (e.g., packet 128c) and assign each packet to the proper queue. For example, dispatch engine 116d can be configured to determine the destination of each of packets 128a, 128c, and 128d and assign each of packets 128a, 128c, and 128d to the proper queue (e.g., queue 112a-112c). More specifically, because packets 128a, 128c, and 128d have the same destination, dispatch engine 116d may assign packets 128a, 128c, and 128d to queue 112a. Also, because packets 128b, 128e, and 128f have the same destination, dispatch engine 116d may assign packets 128b, 128e, and 128f to queue 112b.

Arbiter engine 114d can be configured to select which packets in a queue need to be sent next and group the packets together into one coalesced packet and communicate the coalesced packet to the proper destination. For example, arbiter engine 114d can determine that the packets in queue 112a need to be sent because either queue 112a is full, has satisfied a threshold, a predetermined amount of time has passed, etc. and arbiter engine 114d can coalesce packets 128a, 128c, and 128d into coalesced packet 130d and communicate coalesced packet 130d to network element 102e. Because packets 128a, 128c, and 128d are communicated in coalesced packet 130d rather than individually in three separate packets, bandwidth and network resources can be saved. When network element 102e receives coalesced packet 130d, decoding engine 118e can extract packets 128a, 128c, and 128d from coalesced packet 130d.

In addition, arbiter engine 114d can determine that the packets in queue 112b need to be sent because either queue 112b is full, has satisfied a threshold, a predetermined amount of time has passed, etc. and arbiter engine 114d can coalesce packets 128b, 128e, and 128f into coalesced packet 130e and communicate coalesced packet 130e to network element 102f. Because packets 128b, 128e, and 128f are communicated in coalesced packet 130e rather than individually in three separate packets, bandwidth and network resources can be saved. When network element 102f receives coalesced packet 130e, decoding engine 118f can extract packets 128b, 128e, and 128f from coalesced packet 130e.

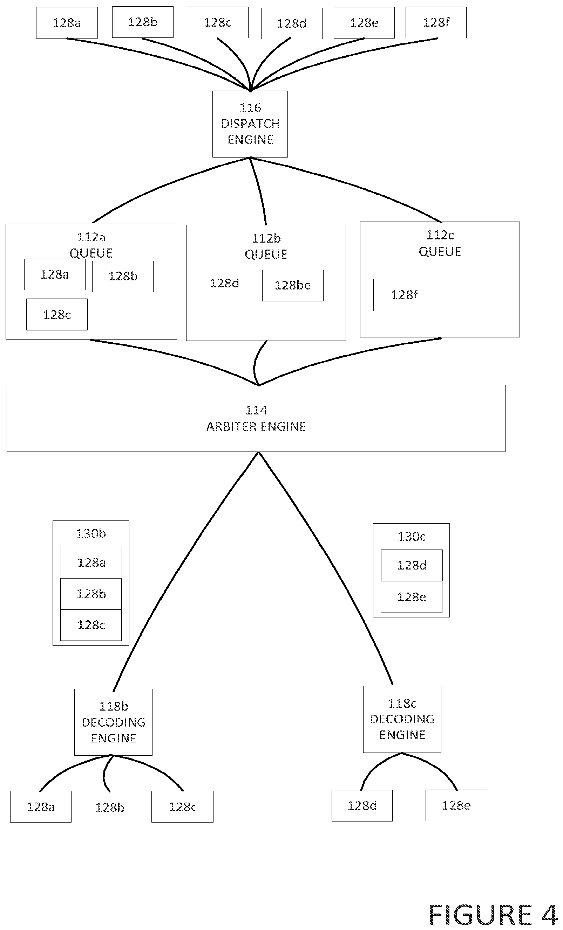

Turning to FIGURE 4, FIGURE 4 is a simplified block diagram illustrating example details of system 100, in accordance with an embodiment of the present disclosure. As illustrated in FIGURE 4, dispatch engine 116 can receive a plurality of packets 128a-128f. Packets 128a-128f are small packets. Based on the destination of each packet, dispatch engine 116 can communicate the packet to a specific queue. For example, because packets 128a-128c have the same destination, dispatch engine 116 communicates the packets to queue 112a. Also, because packets 128d and 128e have the same destination and the destination is different than the destination of packets 128a-128c, dispatch engine 116 communicates packets 128d and 128e to queue 112b. In addition, packet 128f does not have the same destination as packets 128a-128c sent to queue 112a or as packets 128d and 128e sent to queue 112b and packet 128f is sent to queue 112c.

Arbiter engine 114 can determine when the packets in a queue need to be sent. For example, the packets in a queue may need to be sent because the queue is full, has satisfied a threshold, a predetermined amount of time has passed, etc. When the packets in a queue need to be sent, arbiter engine 114 can coalesce the packets in the queue into a coalesced packet. For example, when arbiter engine 114 determines that packets 128a-128c in queue 112a need to be sent, arbiter engine 114 can coalesce packets 128a-128c into coalesced packet 130b and communicate coalesced packet 130b to the common destination of packets 128a-128c. This saves network resources as one packet that includes packets 128a-128c is communicated to the destination rather than three individual small packets. Coalesced packet 130b is received by decoding engine 118b at the common destination and decoding engine 118b extracts packets 128a-128c from coalesced packet 130b.

Also, when arbiter engine 114 determines that packets 128d and 128e in queue 112b need to be sent, arbiter engine 114 can coalesce packets 128d and 128e into coalesced packet 130c and communicate coalesced packet 130c to the common destination of packets 128d and 128e. This saves network resources as one packet that includes packets 128d and 128e is communicated to the destination rather than two individual small packets. Coalesced packet 130c is received by decoding engine 118c at the common destination and decoding engine 118c extracts packets 128d and 128e from coalesced packet 130c. After a predetermined amount of time has passed or additional packets are added to queue 112c and the capacity of queue 112c satisfies a threshold, packets 128c can be communicated to its destination.

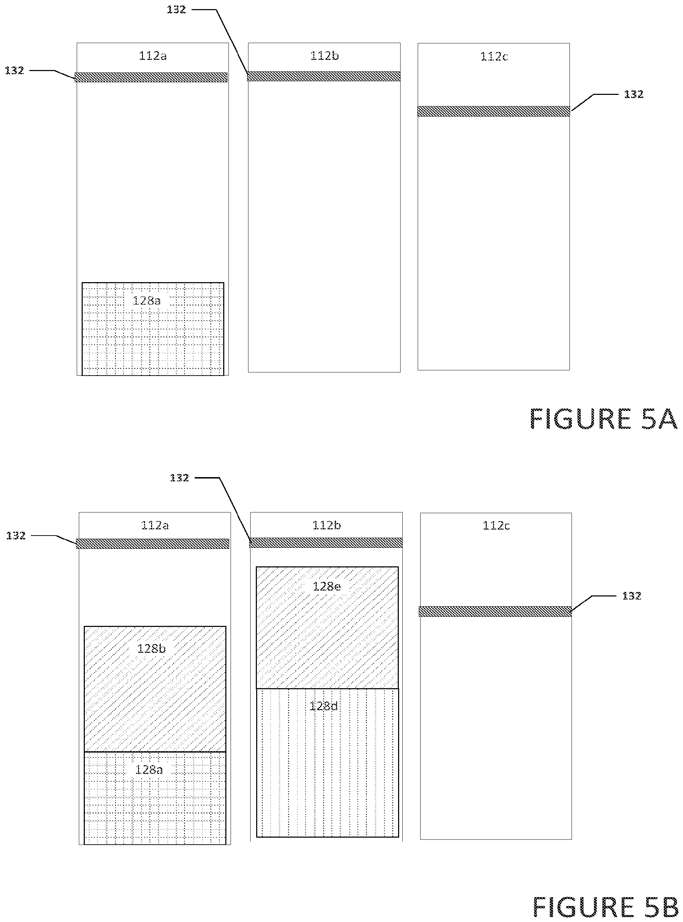

Turning to FIGURES 5A-5D, FIGURES 5A-5D are a simplified block diagram illustrating example details of system 100, in accordance with an embodiment of the present disclosure. As illustrated in FIGURE 5A, each of queues 112a-112c can include a threshold 132. Threshold 132 can be used to help determine when a queue is full and the packets in the queue can be coalesced together and communicated to a common destination. In an example, each queue may have the same threshold or one or more queues may have a different threshold.

As illustrated in FIGURE 5A, queue 112a includes packet 128a and queues 112b and 112c are empty. As illustrated in FIGURE 5B, packet 128b was received and placed in queue 112a. For example, dispatch engine 116 (not shown) may have determined that packet 128b has the same destination as packet 128a and placed packet 128b in queue 112a with packet 128a. Also, packets 128d and 128e were placed in queue 112a. Note that packets 128a-128e may have the same or similar size or one or more may have a different size.

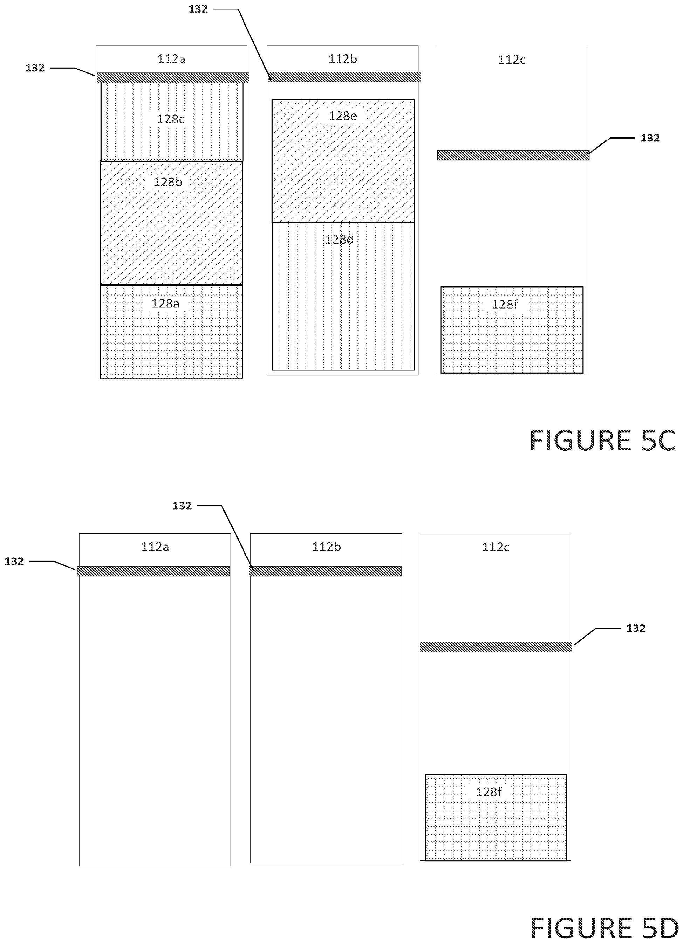

As illustrated in FIGURE 5C, packet 128c was added to queue 112a. This causes the contents of queue 112a to satisfy threshold 132. Further, packets 128f was added to queue 112c. No packets were added to queue 112b and the contents of queue 112b do not satisfy threshold 132. As illustrated in FIGURE 5D, because threshold 132 in queue 112a was satisfied, packets 128a-128c in queue 112a were coalesced together and communicated to their common destination. Also, packets 128d and 128e in queue 112b were also coalesced together and communicated to their common destination. Even though the contents of queue 112b did not satisfy threshold 132, a predetermined amount of time may have passed since 128d was added to queue 112b and the predetermined amount of time triggered packets 128d and 128e being coalesced together and communicated to their common destination. After a predetermined amount of time has passed or additional packets were added to queue 112c to satisfy threshold 132, packet 128f can be communicated to its destination.

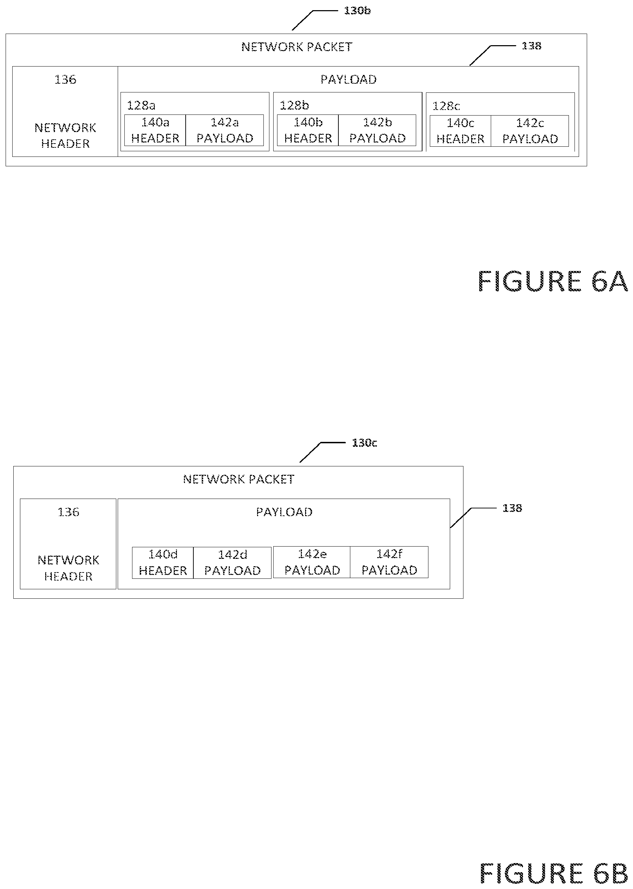

Turning to FIGURE 6A, FIGURE 6A is a simplified block diagram illustrating example details of coalesced packet 130b, in accordance with an embodiment of the present disclosure. Coalesced packet 130b can include a network header 136 and payload 138. Payload 138 can include small packets that have been coalesced to be communicated in a single packet rather than several individual packets. For example, coalesced packet 130b may include packets 128a-128c. Packet 128a can include header 140a and payload 142a, packet 128b can include header 140b and payload 142b, and packet 128c can include header 140c and payload 142c. By communicating packets 128a-128c in one coalesced packet 130b rather than individually in three separate packets, bandwidth and network resources can be saved.

Turning to FIGURE 6B, FIGURE 6B is a simplified block diagram illustrating example details of coalesced packet 130c, in accordance with an embodiment of the present disclosure. Coalesced packet 130c can include a network header 136 and payload 138. Payload 138 can include small packets that have been coalesced to be communicated in a single packet rather than several individual packets. In an example, the packets may have been coalesced at an application header level and a header is not required for each packet in payload 138. For example, coalesced packet 130c may include a common or combined header and the payload of packets 128d-128f coalesced in coalesced packet 130c. For example, payload 138 can include header 140d, and payloads 142d-142f. Header 140 can be a common header or a combination of the headers of packets 128d-128f. Payload 142d can be the payload of packet 128d illustrated in FIGURE 2B. Payload 142e can be the payload of packet 128e illustrated in FIGURE 2B. Payload 142f can be the payload of packet 128f illustrated in FIGURE 2B.

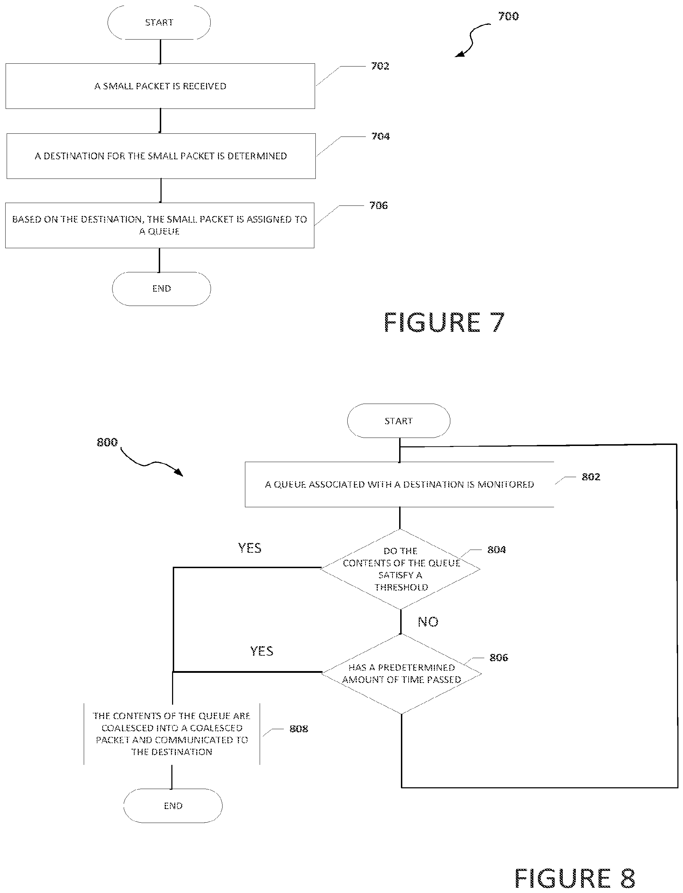

Turning to FIGURE 7, FIGURE 7 is an example flowchart illustrating possible operations of a flow 700 that may be associated with the coalescing of small payloads, in accordance with an embodiment. In an embodiment, one or more operations of flow 700 may be performed by arbiter engine 114, dispatch engine 116, and/or decoding engine 118. At 702, a small packet is received. At 704, a destination for the small packet is determined. At 706, based on the destination, the small packet is assigned to a queue. In an example, the queue is a dedicated queue to temporarily store small packets that are to be coalesced and communicated to a common destination.

Turning to FIGURE 8, FIGURE 8 is an example flowchart illustrating possible operations of a flow 800 that may be associated with the coalescing of small payloads, in accordance with an embodiment. In an embodiment, one or more operations of flow 800 may be performed by queue synchronization engine 110. At 802, a queue associated with a destination is monitored. At 804, the system determines if the contents of the queue satisfy a threshold. If the contents of the queue satisfy a threshold, then the contents of the queue are coalesced into a coalesced packet and communicated to the destination, as in 808. If the contents of the queue do not satisfy a threshold, then the system determines if a predetermined amount of time has passed, as in 806. If a predetermined amount of time has passed, then the contents of the queue are coalesced into a coalesced packet and communicated to the destination, as in 808. If a predetermined amount of time has not passed, then the system returns to 802 and the queue associated with the destination is monitored. This process can be done for each queue in the system.

It is also important to note that the operations in the preceding flow diagrams (i.e., FIGURES 7 and 8) illustrate only some of the possible correlating scenarios and patterns that may be executed by, or within, system 100. Some of these operations may be deleted or removed where appropriate, or these operations may be modified or changed considerably without departing from the scope of the present disclosure. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by system 100 in that any suitable arrangements, chronologies, configurations, and timing mechanisms may be provided without departing from the teachings of the present disclosure.

Although the present disclosure has been described in detail with reference to particular arrangements and configurations, these example configurations and arrangements may be changed significantly without departing from the scope of the present disclosure. Moreover, certain components may be combined, separated, eliminated, or added based on particular needs and implementations. Additionally, although system 100 have been illustrated with reference to particular elements and operations that facilitate the communication process, these elements and operations may be replaced by any suitable architecture, protocols, and/or processes that achieve the intended functionality of system 100.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 112 as it exists on the date of the filing hereof unless the words "means for" or "step for" are specifically used in the particular claims; and (b) does not intend, by any statement in the specification, to limit this disclosure in any way that is not otherwise reflected in the appended claims.

### OTHER NOTES AND EXAMPLES

Example C1 is at least one machine readable storage medium having one or more instructions that when executed by at least one processor, cause the at least one processor to group two or more small packets together in a queue dedicated to temporarily store small packets that are to be communicated to a common destination, where a small packet is a packet that is smaller than a network packet coalesce the two or more small packets into a coalesced packet, and communicate the coalesced packet to the common destination.
In Example C2, the subject matter of Example C1 can optionally include where the coalesced packet is a network packet and a size of one of the two or more small packets is less than half the size of the network packet.
In Example C3, the subject matter of any one of Examples C1-C2 can optionally include where the one or more instructions further cause the at least one processor to determine that a level of the queue reached a threshold, wherein reaching the threshold is what caused the two or more small packets to be coalesced into the coalesced packet.
In Example C4, the subject matter of any one of Examples C1-C3 can optionally include where the one or more instructions further cause the at least one processor to determine that a predetermined amount of time has passed, wherein reaching the predetermined amount of time is what caused the two or more small packets to be coalesced into the coalesced packet.
In Example C5, the subject matter of any one of Examples C1-C4 can optionally include where the common destination is a network switch.
In Example C6, the subject matter of any one of Examples C1-C5 can optionally include where the coalesced packet is a high-performance computing fabric network packet.
In Example C7, the subject matter of any one of Examples C1-C6 can optionally include where the common destination is part of a data center.
In Example A1, an electronic device can include memory, a queue dedicated to temporarily store small packets that are to be communicated to a common destination, where a small packet is a packet that is smaller than a network packet one or more processors, a dispatch engine, where the dispatch engine is configured to cause the one or more processors to group two or more small packets that are to be communicated to the common destination together in the queue, and an arbiter engine where the arbiter engine is configured to cause the one or more processors to coalesce the two or more small packets into a coalesced packet and communicate the coalesced packet to the common destination.
In Example A2, the subject matter of Example A1 can optionally include where a size of one of the two or more small packets is less than half the size of the coalesced packet.
In Example A3, the subject matter of any one of Examples A1-A2 can optionally include where the arbiter engine is further configured to cause the one or more processors to determine that a level of the queue reached a threshold, where reaching the threshold is what caused the two or more small packets to be coalesced into the coalesced packet.
In Example A4, the subject matter of any one of Examples A1-A3 can optionally include where the queue is part of a finite set of queues and each queue in the finite set of queues is associated with a unique destination.
In Example A5, the subject matter of any one of Examples A1-A4 can optionally include where the coalesced packet is a high-performance computing fabric network packet.
Example AA1 is a device include memory, a queue dedicated to temporarily store small packets that are to be communicated to a common destination, wherein a small packet is a packet that is smaller than a network packet, means for grouping two or more small packets that are to be communicated to the common destination together in the queue, means for coalescing the two or more small packets into a coalesced packet, and means for communicating the coalesced packet to the common destination.
In Example AA2, the subject matter of Example AA1 can optionally include where a size of one of the two or more small packets is less than half the size of the network packet.
In Example AA3, the subject matter of any one of the Examples AA1-AA2 can optionally include means for determining that a level of the queue reached a threshold, wherein reaching the threshold is what caused the two or more small packets to be coalesced into the coalesced packet.
In Example AA4, the subject matter of any one of the Examples AA1-AA3 can optionally include means for determining that a predetermined amount of time has passed, wherein reaching the predetermined amount of time is what caused the two or more small packets to be coalesced into the coalesced packet.
In Example AA5, the subject matter of any one of the Examples AA1-AA4 can optionally include where the common destination is a network switch.
In Example AA6, the subject matter of any one of Examples AA1-AA5 can optionally include where the network packet is a high-performance computing fabric network packet.
Example M1 is a method including grouping two or more small packets that are to be communicated to a common destination, wherein the two or more small packets are grouped together in a queue dedicated to temporarily store small packets that are to be communicated to the common destination, wherein a small packet is a packet that is smaller than a network packet coalescing the two or more small packets into a coalesced packet, where the coalesced packet is a network packet, and communicating the coalesced packet to the common destination.
In Example M2, the subject matter of Example M1 can optionally include where a size of one of the two or more small packets is less than half the size of the network packet.
In Example M3, the subject matter of any one of the Examples M1-M2 can optionally include determining that a level of the queue reached a threshold, wherein reaching the threshold is what caused the two or more small packets to be coalesced into the coalesced packet.
In Example M4, the subject matter of any one of the Examples M1-M3 can optionally include determining that a predetermined amount of time has passed, wherein reaching the predetermined amount of time is what caused the two or more small packets to be coalesced into the coalesced packet.
In Example M5, the subject matter of any one of the Examples M1-M4 can optionally include where the common destination is a network switch.
In Example M6, the subject matter of any one of Examples M1-M5 can optionally include where the network packet is a high-performance computing fabric network packet.
Example S1 is a system for coalescing small payloads. The system can include memory, a queue dedicated to temporarily store small packets that are to be communicated to a common destination, where a small packet is a packet that is smaller than a network packet where the queue is part of a finite set of queues and each queue in the finite set of queues is associated with a unique destination, one or more processors, a dispatch engine and an arbiter engine. The dispatch engine can be configured to cause the at least one processor to group, in the queue, two or more small packets that are to be communicated to the common destination. The arbiter engine can be configured to cause the at least one processor to coalesce the small packets into a coalesced packet and communicate the coalesced packet to the common destination
In Example S2, the subject matter of Example S1 can optionally include where a size of one of the two or more small packets is less than half the size of the coalesced packet.
In Example S3, the subject matter of any one of the Examples S1-S2 can optionally include where the arbiter engine is further configured to determine that a level of the queue reached a threshold, wherein reaching the threshold is what caused the two or more small packets to be coalesced into the coalesced packet.
In Example S4, the subject matter of any one of the Examples S1-S3 can optionally include where the arbiter engine is further configured to determine that a predetermined amount of time has passed, wherein reaching the predetermined amount of time is what caused the two or more small packets to be coalesced into the coalesced packet.
In Example S5, the subject matter of any one of the Examples S1-S4 can optionally include where the common destination is a network switch.
In Example S6, the subject matter of any one of the Examples S1-S5 can optionally include where the coalesced packet is a high-performance computing fabric network packet.
In Example S7, the subject matter of any one of the Examples S1-S6 can optionally include where the system is part of a data center.
Example AAA1 is an apparatus including means for grouping two or more small packets together in a queue dedicated to temporarily store small packets that are to be communicated to a common destination, means for coalescing the two or more small packets into a coalesced packet, and means for communicating the coalesced packet to the common destination.
In Example AAA2, the subject matter of Example AA1 can optionally include where the coalesced packet is a network packet and a size of one of the two or more small packets is less than half the size of the network packet.
In Example AAA3, the subject matter of any one of Examples AA1-AA2 can optionally include means for determining that a level of the queue reached a threshold, wherein reaching the threshold is what caused the two or more small packets to be coalesced into the coalesced packet.
In Example AAA4, the subject matter of any one of Examples AA1-AA3 can optionally include means for determining that a predetermined amount of time has passed, wherein reaching the predetermined amount of time is what caused the two or more small packets to be coalesced into the coalesced packet.
In Example AAA5, the subject matter of any one of Examples AA1-AA4 can optionally include the common destination is a network switch.
In Example AAA6, the subject matter of any one of Examples AA1-AA5 can optionally include the coalesced packet is a high-performance computing fabric network packet.
In Example AAA7, the subject matter of any one of Examples AA1-AA6 can optionally include where the common destination is part of a data center.
Example X1 is a machine-readable storage medium including machine-readable instructions to implement a method or realize an apparatus as in any one of the Examples Al-A5, AA1-AA6, AAA1-7, or M1-M6. Example Y1 is an apparatus comprising means for performing any of the Example methods M1-M6. In Example Y2, the subject matter of Example Y1 can optionally include the means for performing the method comprising a processor and a memory. In Example Y3, the subject matter of Example Y2 can optionally include the memory comprising machine-readable instructions.

## Claims

1. A device comprising:
a queue dedicated to temporarily store packets that are to be communicated to a common destination;
means for grouping two or more packets that are to be communicated to the common destination together in the queue;
means for coalescing the two or more packets into a coalesced packet; and
means for communicating the coalesced packet to the common destination.

2. The device of claim 1, wherein a size of one of the two or more packets is less than half the size of a network packet.

3. The device of claim 1 or claim 2, further comprising:
means for determining that a level of the queue reached a threshold, wherein reaching the threshold is what caused the two or more packets to be coalesced into the coalesced packet.

4. The device of any one of claims 1 to 3, further comprising:
means for determining that a predetermined amount of time has passed, wherein reaching the predetermined amount of time is what caused the two or more packets to be coalesced into the coalesced packet.

5. The device of any one of claims 1 to 4, wherein the common destination is a network switch.

6. The device of any one of claims 1 to 5, wherein the packets are small packets, wherein a small packet is a packet that is smaller than a network packet, and wherein the network packet is a high-performance computing fabric network packet.

7. The device of any one of claims 1 to 6, wherein the queue is part of a finite set of queues and each queue in the finite set of queues is associated with a unique destination.

8. A method comprising:
grouping two or more packets that are to be communicated to a common destination, wherein the two or more packets are grouped together in a queue dedicated to temporarily store packets that are to be communicated to the common destination;
coalescing the two or more packets into a coalesced packet; and
communicating the coalesced packet to the common destination.

9. The method of claim 8, wherein a size of one of the two or more packets is less than half the size of the network packet.

10. The method of claim 8 or claim 9, further comprising:
determining that a level of the queue reached a threshold, wherein reaching the threshold is what caused the two or more packets to be coalesced into the coalesced packet.

11. The method of any one of claims 8 to 10, further comprising:
determining that a predetermined amount of time has passed, wherein reaching the predetermined amount of time is what caused the two or more packets to be coalesced into the coalesced packet.

12. The method of any one of claims 8 to 11, wherein the common destination is a network switch.

13. The method of any one of claims 8 to 12, wherein the packets are small packets, wherein a small packet is a packet that is smaller than a network packet, and wherein the network packet is a high-performance computing fabric network packet.

14. The method of any one of claims 8 to 13, wherein the queue is part of a finite set of queues and each queue in the finite set of queues is associated with a unique destination.

15. At least one machine-readable medium comprising one or more instructions that, when executed by at least one processor, causes the at least one processor to perform the method of any one of claims 8 to 14.
